(19)

**Europäisches Patentamt**
**European Patent Office**
**Office européen des brevets**

(11) **EP 2 774 907 B1**

(12) **EUROPEAN PATENT SPECIFICATION**

(45) Date of publication and mention
of the grant of the patent:
**22.06.2016 Bulletin 2016/25**

(51) Int Cl.:
*C05C 9/00* *(2006.01)*      *C05B 11/08* *(2006.01)*
*C05B 3/00* *(2006.01)*      *C05B 15/00* *(2006.01)*

(21) Application number: **14000780.8**

(22) Date of filing: **05.03.2014**

(54) **Method for continuous manufacture of granular USP nitrogen and phosphate type fertilizers**

Verfahren zur kontinuierlichen Herstellung von körnigem USP-Stickstoff und phosphatartigen Düngemitteln

Procédé de fabrication en continu de fertilisants de type azote USP granulaire et phosphate

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2013 PL 40302813**

(43) Date of publication of application:
**10.09.2014 Bulletin 2014/37**

(73) Proprietors:
- **Instytut Nowych Syntez Chemicznych
24-110 Pulawy (PL)**
- **Grupa Azoty Zaklady Azotowe "Pulawy" Spólka
Akcyjna
24-110 Pulawy (PL)**

(72) Inventors:
- **Biskupski, Andrzej
53-030 Wroclaw (PL)**
- **Mieczyslaw, Borowik
24-103 Zyrzyn (PL)**
- **Dawidowicz, Michal
24-100 Pulawy (PL)**
- **Igras, Janusz
24-100 Pulawy (PL)**
- **Kowalski, Zygmunt
24-100 Pulawy (PL)**
- **Kruk, Janusz
24-100 Pulawy (PL)**
- **Malinowski, Przemyslaw
48-304 Nysa (PL)**
- **Mozenski, Cezary
24-100 Pulawy (PL)**
- **Myka, Agnieszka
24-100 Pulawy (PL)**

- **Rusek, Piotr
24-130 Konskowola (PL)**
- **Sas, Józef
24-100 Pulawy (PL)**
- **Schab, Sebastian
24-130 Konskowola (PL)**
- **Zdeb, Zdzislaw
24-100 Pulawy (PL)**
- **Zdunek, Anna
24-100 Pulawy (PL)**
- **Bielski, Pawel
05-800 Pruszków (PL)**
- **Boleslawska, Agnieszka
24-100 Pulawy (PL)**
- **Schimmelpfennig, Lech
24-100 Pulawy (PL)**
- **Zatorski, Marek
24-100 Pulawy (PL)**
- **Wielicka, Jolanta
24-100 Pulawy (PL)**

(56) References cited:
WO-A1-01/42172      CN-A- 101 508 607
FR-A1- 2 684 372      US-A- 5 409 516

- **BOROWIK M ET AL: "Production technology of
nitrogen-sulphur-calcium fertilizers on the base
of urea and phosphogypsum", CHEMIK, vol. 66,
no. 5, 1 May 2012 (2012-05-01), pages 525-534,
XP002729434,**
- **PRZEMYSLAW MALINOWSKI ET AL:
"Preparation methods of calcium sulphate and
urea adduct", POLISH JOURNAL OF CHEMICAL
TECHNOLOGY, vol. 9, no. 4, 1 January 2007
(2007-01-01) , XP055138539, ISSN: 1509-8117,
DOI: 10.2478/v10026-007-0102-z**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 774 907 B1

**Description**

The subject of the present invention is a method for the manufacture of granular USP (urea-superphosphate) nitrogen and phosphate fertilizers and products on their basis, said method based on the decomposition of phosphate raw materials with a reactant solution of urea in sulfuric acid with the optional addition of phosphoric acid.

Known in the art are methods for the manufacture of complex fertilizers in granular form, based on highly concentrated solutions of urea in sulfuric acid.

The use of urea as a component of solid complex fertilizers allows for obtaining high total nutrients content in fertilizers. In addition, the integration of urea in multi-substance systems having fertilizer character allows to increase its yield efficiency. Therefore, various attempts have been taken previously to launch production of complex fertilizers containing urea. Projects of this type included attempts to manufacture complex fertilizers using superphosphates and urea. Such activities have been conducted by various companies and, up to the 1990s, relied mainly on attempts to use intermediates, i.e. superphosphates and solid urea, for the manufacture of NP and NPK fertilizers. Such attempts generally lead to unsatisfactory results, since superphosphates contain large amounts of water which is released as a result of the reaction of urea with hydrates of calcium phosphate and sulfate, causing liquefaction of granular mixtures. Additional liquefaction of granular mixtures is caused by urea, as a result of strong dependence of solubility in water on temperature. The urea-induced liquefaction of granular mixtures forces the application of a series of economically adverse and technically troublesome solutions in the individual stages of a fertilizer manufacturing process. These are:

-   conducting the granulation and drying at significantly reduced temperatures, which necessitates using an increased amount of the drying agent and larger dryer size,
-   large recycle, which translates into an increase in consumption of energy to move increased masses of intermediates,
-   sometimes using, so-called, cold recycle in order to avoid the disintegration of granules and sieve pores plugging during product classification,
-   applying special solutions in the granulation unit in order to obtain optimum temperature in connection to the use of the cold recycle,
-   the risk of more frequent plant shutdowns for individual equipment cleaning.

It should be added that similar difficulties, but to a lesser intensity, occur when using raw materials other than superphosphates to manufacture NP and NPK fertilizers containing urea. It should also be added that simultaneous use of urea and ammonium nitrate in the manufacture of granulated fertilizers is not an option, because of difficulties in the manufacturing process as well as poor performance of products thus obtained.

WO0142172 discloses a process for the preparation of urea superphosphate fertilizers, which comprises reacting ground urea and ground phosphaste rock with sulfuric acid in a single stage, in the presence of gypsum or phosphogypsum, or calcium sulfate monohydrate or anhydrous, optionally adding phosphoric acid to the reaction mixture. Water may be added to the reagents, in a quantity from 4% to 14%; according to the inventors, water has no influence on the reaction. The duration of the reaction is typically from 0.5 to 6 minutes.

A significant improvement in the manufacture of fertilizers simultaneously containing urea and superphosphate components has been achieved as a result of work coordinated by Grande Paroisse (currently GPN). As a result of this work, a USP (urea-superphosphate) fertilizer manufacturing process was developed.

The basic version of the USP manufacturing process, according to publication by Achard P., Schwob Y., Limousin L., A new route for urea superphosphate fertilizers, Phos. and Pot. No 191, p. 27-33, May-June 1994 (hereinafter referred to as "publication by Achard, Schwob, Limousin"), consists in carrying out a reaction of urea solution in sulfuric acid with phosphate rock to yield a product in which urea is entirely bound as an adduct to calcium sulfate; the remainder of calcium sulfate can occur in the anhydrous form, as a hemihydrate and dihydrate, phosphorous occurs in form of mono- and dicalcium phosphate, and fluoride remains virtually entirely in the form of calcium fluoride. According to that version, the fertilizer manufacturing process consists of the following steps:

1. production of a reactant solution of urea in sulfuric acid (the basic composition of the solution is described by molar ratio of $CO(NH_2)_2$: $H_2SO_4$: $H_2O$ = 3.6: 1: 1),
2. reaction of the reactant solution with a phosphate rock (natural phosphate raw material)
3. aging of the solid product defined as USP (urea-superphosphate)
4. optionally, granulation of the fertilizer using steam, ammonia or steam plus ammonia as the granulating media (from the text of the document [1], it appears that the granulation was carried out using the so-called cold recycle, i.e. cooling the product after granulation and recycling cold undersize and milled oversize material to the granulator).

The basic version of the technology also provides for the possibility to manufacture complex fertilizers with different compositions. Additional raw materials were potassium salts, MAP, DAP, ammonium sulfate, and fillers such as silica and calcium sulfate. It was also found that nitrates, especially ammonium nitrate, cannot be the components in such fertilizers (according to the said publication of Achard, Schwob, Limousin).

During the dissolution of urea in a sulfuric acid solution, two exothermic reactions occur:

$$H_2SO_4 + CO(NH_2)_2 = CO(NH_2)_2 \cdot H_2SO_4 \qquad (1)$$

$$CO(NH_2)_2 \cdot H_2SO_4 + CO(NH_2)_2 = 2CO(NH_2)_2 \cdot H_2SO_4 \qquad (2)$$

The basic reaction (exothermic) occurring during the manufacture of a USP fertilizer is described by the equation (3):

$$Ca_{10}(PO_4)_6F_2 + 6 [H_2SO_4 + 3,6CO(NH_2)_2] + 3 H_2O = 3Ca(H_2PO_4)_2 \cdot H_2O + CaF_2 + 5,4[CaSO_4 \cdot 4CO(NH_2)_2 + 0,6CaSO_4 \qquad (3)$$

The rate of this reaction depends on the type of phosphate raw material, its particle size distribution, chemical composition of the reactant solution (molar ratio $CO(NH_2)_2$: $H_2SO_4$ : $H_2O$ and the possible participation of phosphoric acid), temperature, reactants mixing intensity, etc. Due to physicochemical constraints, the reactions between the phosphate raw material and the components of the reactant solution do not run to completion in the second step of the process. This necessitates the so-called aging of the intermediate product, i.e. the after-reaction mass, in the basic variant of the process, during which the reactions between the raw materials used run out until a steady state, characteristic of the end product, is reached (usually in such a product there are reactants capable of reacting with each other, but mass transfer constraints prevent these reactions from proceeding).

According to the article by Nowak R. and co-authors, Technologia wytwarzania i jakość nawozów mineralnych produkowanych na bazie USP w Zakadach Chemicznych "SIARKOPOL", Przem. Chem., Vol.82, No. 8-9, p. 855-860, 2003, in addition to reactions 1-3, in the system under consideration there may also proceed side reactions, most of which are undesirable in view of both product quality and process safety. These reactions are:

- hydrolysis of urea with neutralisation of the ammonia produced with sulfuric acid and phosphoric acid:

$$CO(NH_2)_2 + H_2O + H_2SO_4 = (NH_4)_2SO_4 + CO_2 \qquad (4)$$

$$CO(NH_2)_2 + H_2O + 2H_3PO_4 = 2NH_4H_2PO_4 + CO_2 \qquad (5)$$

- hydrolysis of urea with neutralisation of the ammonia produced with ammonium and calcium hydro-salts (examples):

$$CO(NH_2)_2 + H_2O + 2NH_4HSO_4 + 2(NH_4)_2SO_4 + CO_2 \qquad (6)$$

$$CO(NH_2)_2 + H_2O + Ca(H_2PO_4)_2 = Ca(NH_4)_2(HPO_4)_2 \qquad (7)$$

- reaction of urea with sulfuric and phosphoric acids to form amide compounds:

$$CO(NH_2)_2 + 2H_2SO_4 = 2NH_2SO_3H + CO_2 + H_2O \qquad (8)$$

$$CO(NH_2)_2 + H_2SO_4 = NH_2\text{-}SO_3NH_4 + CO_2 \qquad (9)$$

$$CO(NH_2)_2 + H_3PO_4 = NH_2\text{-}HPO_3NH_4 + CO_2 \qquad (10)$$

- reactions of urea with ammonium and calcium hydro-salts to form amide compounds (examples):

$$CO(NH_2)_2 + 2NH_4HSO_4 = (NH_4)_2SO_4 + NH_2\text{-}SO_3\text{-}NH_4 + CO_2 \qquad (11)$$

$$CO(NH_2)_2 + Ca(H_2PO_4)_2 = CaHPO_4 + NH_2\text{-}HPO_3\text{-}NH_4 + CO_2 \qquad (12)$$

- formation of biuret:

$$2CO(NH_2)_2 = NH_2\text{-}CO\text{-}NH\text{-}CO\text{-}NH_2 + NH_3 \qquad (13)$$

Reactions 8-9, 11 and 13, result in deterioration of the quality of the fertilizers manufactured, due to formation of substances harmful to plants, such as amidosulfonic compounds and biuret (Maciaszek S., Mocznik, WNT, Warszawa 1967), (Moeller T., Chemia nieorganiczna dla zaawansowanych, PWT, Warszawa 1959).

Analogous reactions yielding amidophoshoric compounds are less likely to occur and do not cause deterioration of product properties (Bednarek W., Badania nad przyswajalnosca dla roslin fosforu z amidofosforanu amonowego, Roczniki Gleboznawcze, t.XXXIV, nr3, s.121-131, Warszawa 1983). It should be noted that in the USP manufacturing process there is a big threat to safety due to the possibility of occurrence of exothermic reactions (among the reactions 4-13 only reaction 13 is endothermic, which is what the creators of the present invention have found out as a result of own research using DTA and TG methods). As a result of these reactions (e.g. a reaction where sulfuric acid and urea adducts are formed (equations 1 and 2), or phosphate rock reaction with the reactant solution (Equation 3), such an increase in temperature can occur causing acceleration of the exothermic reactions 4-12, that it can lead to expulsion of hot reactant mixture from process equipment, which may lead to destruction of equipment and cause harm to health and life.

Reactions that pose a safety threat in the manufacture of USP fertilizers are primarily:

- exothermic urea hydrolysis reactions including neutralisation of released ammonia using sulfuric acid and phosphoric acid:

$$CO(NH_2)_2 + H_2O + H_2SO_4 = (NH_4)_2SO_4 + CO_2 \qquad (4)$$

$$CO(NH_2)_2 + H_2O + 2H_3PO_4 = 2NH_4H_2PO_4 + CO_2 \qquad (5)$$

- exothermic reactions of urea with sulfuric acid and phosphoric acid with formation of amide compounds:

$$CO(NH_2)_2 + 2H_2SO_4 = 2NH_2SO_3H + CO_2 + H_2O \qquad (8)$$

$$CO(NH_2)_2 + H_2SO_4 = NH_2\text{-}SO_3NH_4 + CO_2 \qquad (9)$$

$$CO(NH_2)_2 + H_3PO_4 = NH_2\text{-}HPO_3NH_4 + CO_2 \qquad (10)$$

Obviously, the safety threat in the course of the above exothermic reactions with urea is the biggest in the initial stage of the USP manufacturing process, which is the manufacture of the reactant solution of urea in sulfuric acid or in a mixture of sulfuric and phosphoric acids. A lower safety threat occurs in the 2nd stage of the process, which is the stage of a reaction of the reactant solution with phosphate raw material. If process stage 2 is conducted incorrectly (too much unreacted sulfuric acid remaining in the product after stage 2), unwanted reactions may also run during the 3rd stage, aging of the solid product.

For this reason, during the aging of the product it is necessary to rake it in order to avoid spontaneous heat-up which can lead to rapid changes with release of carbon dioxide and spreading the aging product.

The USP manufacturing process according to the first information from Grande Paroisse (given in the a/m publication of Achard, Schwob, Limousin) is similar to the manufacture of single superphosphate. It comprises the following steps: preparation of reactant solution (in the case of single superphosphate manufacture it is sulfuric acid solution, and in the case of USP the reactant solution is urea solution in sulfuric acid), reaction of the obtained solution with phosphate, aging and granulation of the solid product without/with additives.

According to the literature, the fundamental advantages of the USP-type fertilizers and their manufacture technology according to the GPN are:

- lower manufacturing cost per same amounts of nutrients,
- extended activity time for nitrogen in both the USP and fertilizers on its basis, compared to the urea nitrogen,
- increased yield efficiency of urea,
- better availability of calcium and sulfur from USP than from phosphogypsum or single superphosphate
- ability to manufacture USP in single superphosphate (SSP) production plants after installing an additional unit for the preparation of reactant solution of urea in sulfuric acid,
- a less complex off-gas treatment system in the USP plant than SSP plant, due to the fact that calcium fluoride practically does not change during the process (according to the said publication of Achard, Schwob, Limousin).

Methods for the manufacture of granular fertilizers of the USP type, and granular products containing USP, which require so-called aging have significant drawbacks. These are:

- the need to build storage rooms for the aging process,
- handling operations consisting in raking the aging intermediate product or the final product in order to prevent caking of the whole mass, and to prevent spontaneous heat-up of the whole mass,
- the need to install an air purification system in the storage facility, due to the emission of fluorine compounds (small but real and hazardous for the personnel and the environment),
- safety threat due to the course of exothermic reactions, mainly between urea and sulfuric acid,
- the whole fertilizer manufacturing process difficult to put in continuous mode.

The further described method according to the present invention avoids the above-mentioned disadvantages. A method, according to the present invention, for the manufacture of a nitrogen-phosphate fertilizer containing nitrogen in the form of calcium sulfate tetraureate and phosphorous in the form of a mono- and/or dicalcium phosphate, obtained by decomposition of finely ground phosphate raw material of natural origin using urea-sulfuric acid solution, consists in that the reaction of phosphoric raw material decomposition is carried out using a solution containing from 1.5 to 4.0 mol of urea per 1 mol of sulfuric acid, in a quantity corresponding to 90 to 100% of acid, in respect of the stoichiometric requirement for the total decomposition of the phosphate rock, whereas into the reaction environment water is added in an amount necessary to ensure its content in process pulp in the range 16-25% in respect of the whole mass of the suspension, and the process pulp obtained is fed directly to a granulation unit.

The method according to the present invention is particularly suitable for implementation as a continuous process.

The natural raw material can be replaced up to 50% by weight with ash from incineration of wastewater sludges and/or waste animal tissues having $P_2O_5$ content above 20% by weight.

In yet another embodiment of the method according to the present invention, up to 50% of the sulfuric acid feed input can be replaced with phosphoric acid at a proportion of one (1) mol sulfuric acid-two (2) moles of phosphoric acid.

Phosphoric acid can be added to the process pulp manufacturing unit with the reactant solution fed to process pulp manufacturing unit or directly to this unit.

Preferably, up to 5% by weight of fine product fractions, particularly preferably from an off-gas dust removal unit, is recycled back to the pulp unit.

The time necessary to produce the process pulp is preferably 90-180 minutes, depending on the raw phosphate raw material used and the urea-to-sulfuric acid molar ratio.

The reactant solution fed to the reaction with phosphate has a temperature preferably from 35 to 75°C, even more preferably from 45 to 65°C.

The reaction of phosphate rock with the reactant solution is preferably carried out at a temperature below 90°C, particularly preferably from 70 to 90° C.

Preferably, a surfactant having anti-foam activity (defoamer) is added to the environment of the reaction of phosphate rock with the reactant solution, in an amount of up to 0,02% by weight of the finished fertilizer; for example, di-(2-ethylhexyl) sulfosuccinate is added.

Preferably, product temperature during drying is maintained not higher than 105°C, more preferably not higher than 95°C.

Preferably, at least one component of these given below is added in a ground form to the granulation unit:

- phosphate component such as superphosphates, phosphate rocks, or ashes from the incineration of sewage sludge and/or waste animal tissues,

- phosphate-nitrogen component such as ammonium phosphates MAP and/or DAP, or USP powdery fertilizer,

- potassium component such as potassium chloride or potassium sulfate,

- magnesium component such as magnesium sulfate,

- fossil component such as kieserite, carnallite, magnesite, dolomite,

- microelemental component such as, for example, boric acid.

It is preferred to add the whole amount of water to the phosphate rock digestion unit, preferably in the form of the reactant solution.

Preferably, steam and/or ammonia are added to the granulation unit. Instead of ammonia, as well as in addition to ammonia, one can use magnesite or bentonite. These additional components greatly improve the stability of the USP.

The process is implemented in a process system that comprises the following units: preparation of the reactant solution, preparation of process suspension resulting from the reaction of reactant solution with phosphate rock, granulation, drying, recovery of proper product fraction, cooling, conditioning of the product, grinding oversize material and recycling undersize material and ground oversize material, as well as off-gas treatment and recycle of the off-gas treatment products back to the production process.

In the course of the work carried out in bench- and semi-industrial scale, it was found that the course of the process slurry preparation and the granulation process strongly depends on the type of phosphate raw material. In order to avoid dependence on the type of raw material it is preferred to use two slurry reactors operating alternately. Preferred is also a two-stage method of granulation (an agitated granulator and a pug mill granulator i.e. a granulating drum or a granulating disc), because this allows for increasing the share of the main product fraction, which translates into reduction of recycle rate and power consumption of the process and reduces the share of urea in side reactions leading to the formation of products harmful to plants and causing phosphorus reversion. Suitable for curbing recycle rate and energy consumption of the process is also to install a buffer tank and a recycle feed unit in the process train, allowing for faster operator response at a non-optimum performance of the fertilizer manufacturing process.

The advantages of the method according to the present invention are:

- ability to conduct the manufacturing process in the continuous mode, avoiding additional storage and additional process operations in the manufacturing process, related to the aging,
- possibility to use sulfuric acid with lower concentration, e.g. recovered from various industries,
- reduced process security risks as a result of the use of a reactant solution having lower concentration and also as a result of complete reaction of sulfuric acid with phosphate rock during preparation of the process pulp,
- mitigation of the risk of formation of substances harmful to plants, as a result of the use of a reactant solution having lower concentration,
- reduced fluorine emissions in relation to the USP manufacturing process claimed in the WO 92/10443 and FR 2.684.372.

It should be stressed that a careful analysis of the texts of patents WO 92/10443 and FR 2684.372 leads to the conclusion that the implementation of the methods described in the a/m patents leads to significant quantities of sulfur amidocompounds in the product (more than 1%). Namely, significant quantities of ammonium ion have been reported where water did not occur in the raw materials (see examples therein), which indicates that either there run reactions of formation of such compounds, or that documentation of the tests carried out is inaccurate. For sure, our method limits the formation of sulfur amidocompounds to less than 0.01%, which is another advantage of our method.

A very important issue for the whole of the process being carried out according to the invention is to provide suitable operating conditions for the reactant solution and the process pulp (suspension) preparation units. The design of the reactant solution preparation unit should ensure complete dissolution of urea in the dissolving step, prevent its crystallization during possible plant shutdowns, and protect against exceeding the maximum temperature. Preferably, this unit is made up of two agitated reactors connected in series, equipped with coils supplied with cold or hot water or steam as required.

In case of the process slurry (pulp) preparation unit, it is necessary to maintain the claimed temperature range, reagent mixture residence time, and the use of the antifoam agent. Maintaining appropriate temperature and antifoam will ensure appropriate transport properties of the slurry (pulp) and will make it possible to use the entire volume of the components of this unit, and maintaining the claimed residence time will ensure reaction turnover of more than 95% of mineral acids in the reaction with phosphate raw materials expected to be used in the process according to our invention.

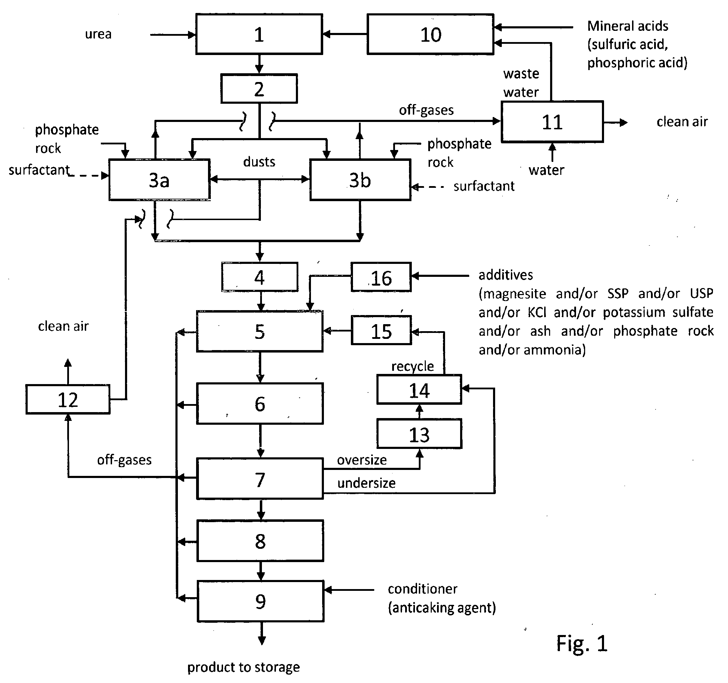

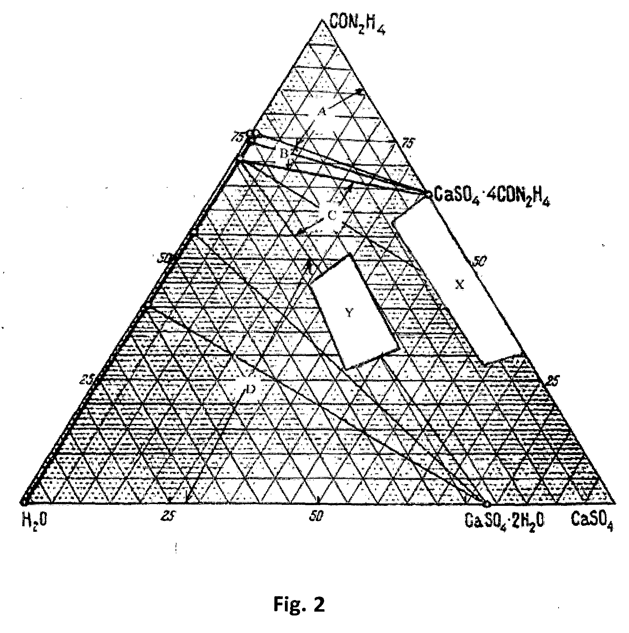

The method according to the present invention has been illustrated with examples of implementation of the process on a semi-industrial scale, summed up in Table 1. A plant according to the invention has been presented in form of a block diagram in Figure 1. Figure 2 shows a ternary phase equilibrium diagram for the following system: $CaSO_4$-$CO(NH_2)_2$-$H_2O$.

An industrial plant according to the present invention, as presented in the embodiment shown in Fig. 1, consists of the following components:

- agitated reactor 1 for the production of reactant solution,
- reactant solution feeder 2,
- pulp reactors 3a,b,
- pulp feeder 4,
- granulator set 5 consisting of an agitated granulator and a disc granulator,
- rotary dryer 6 supplied co-currently with heated air,
- a set of sieves 7,
- cooler 8,
- conditioning drum 9,

- acid thinner/mixer 10,
- wet-treatment unit: scrubber 11,
- dry treatment unit: cyclone 12,
- oversized material mill 13,
- recycle buffer tank 14,
- recycle feeder 15,
- additional raw materials feeder 16.

THE ABOVE SPECIFIED PLANT IS NOT COVERED BY THE CLAIMS.

The method according to the present invention was tested in a number of test runs in a semi-industrial rig being the basic part of the plant shown in Fig. 1, containing the following components:

- agitated reactor 1 for the production of reactant solution,

- a system of two reactors, 3a and 3b, each with a heating shell, agitator and a reflux condenser, intended for the manufacture of USP slurry, operating alternately for 2-3 hours preparing the pulp and 2-3 hours supplying the granulation system,

- granulation unit 5 comprising an agitated granulator and a disc granulator,

- rotary dryer 6 supplied co-currently with heated air,

- set of sieves 7 with mesh sizes 5 and 2 mm,

- feeders of the process pulp and solid raw materials and additives,

- recycle system comprising oversized material grinding mill 13, buffer tank 14 and recycle feeder 15.

The results of the tests are presented in Table 1.

The method according to the present invention is presented in detail in the examples given below. To enable a fuller understanding of the invention, the preparatory stages have also been described, said stages not falling within the scope of protection of the invention presented in the claims.

**A.** Description of the preparation of the reactant solution

For the purposes of preparation of the start-up recycle a reactant solution was prepared having molar ratio $CO(NH_2)_2 : H_2SO_4 : H_2O = 3{,}6 : 1{,}0 : 6{,}52$, in an amount necessary to produce 200 kg of USP of a standard composition, i.e. containing approx. 21% N and 10% $P_2O_5$. For the purpose of testing the manufacture of the product according to the present invention, the reactant solution preparation process was conducted in a continuous mode by feeding to the agitated reactor 1, at a predetermined ratio, sulfuric acid solution of desired concentration and ground urea.

**B.** Description of the preparation of the start-up recycle:

A pulp reactor was supplied simultaneously with reactant solution and phosphate rock, with an agitator operating, and an antifoam was dispensed at a quantity necessary to destroy the raising foam. After filling the reactor up to ¾ volume, the pulp was agitated for 2 hours while maintaining the temperature at 70-80°C. After that period, the reactor was evacuated into trays. The content of the trays was dried in a drying chamber. The dried product was ground to particle size of 2-5 mm and fed to the above described semi-industrial plant for testing fertilizer granulation processes.

**C. General description of the performance of the method according to the present invention**

A test manufacture of the product was commenced with preparing reactant solution in a thermostatted reactor 1. To this end, the reactor 1 was supplied continuously with urea and sulfuric acid solution having a desired concentration and at a predetermined mass ratio. A series of reactant solution preparation test runs was carried out for a temperature range in the reactor of 30-75°C. Next, the solution thus produced was fed to a USP fertilizer pulp reaction unit. At the same time the pulp reaction unit was fed with ground phosphate rock containing 30,25% $P_2O_5$ and 48,05% CaO and an antifoam (quantities according to Table 1). The ratio between the quantity of the phosphate rock and the quantity of the reactant solution being fed to the reaction unit was selected depending on the composition of the phosphate raw material (% by weight $P_2O_5$ and CaO). Examples of the calculation of reagent input quantities are shown below.

A series of test runs was carried out for residence time of the pulp made in the reaction unit over a range of 1,5-3 h, in order to allow for a high degree of reaction turnover of the phosphate raw material and to allow for degassing and obtaining the correct consistency of the pulp, which then would translate into stability of the granulation process as well as facilitate the transport of the pulp to the granulation unit. The tests were carried out at temperatures in the pulp manufacture unit over the range of 70-90°C. The pulp so prepared was fed to a granulation unit 5, where it was mixed with a preheated flow of previously manufactured USP fertilizer recycle in circulation. Granules formed were fed to a rotary dryer 4 operating co-currently. Product temperature at the outlet of the dryer was maintained at a level not exceeding 100°C. Dried, but still hot granulate was fed to a double-deck vibrating sieve 7 where separation occurred of the fraction range of 2 to 5 mm. Undersized material and ground oversized material was recycled back to the circulation system via a recycle system comprising a grinding mill 13 and a recycle buffer tank 14. The end product was recovered from the system at an amount equivalent to the weight of the raw materials entered, the remainder being fed to the recycle system in order to maintain the necessary quantity of fertilizer in circulation.

A sample scheme to calculate the demand for reactant solution necessary for the decomposition of phosphate raw material depending on its composition.

The decomposition process of the ground phosphate raw material using a reactant solution (containing 3.6 moles of urea per 1 mol sulfuric acid) can be described with the following equation:

$$Ca_{10}(PO_4)_6F_2 + 6\,[H_2SO_4 + 3{,}6\,CO(NH_2)_2] + 3H_2O = 3\,Ca(H_2PO_4)_2 \cdot H_2O + 5{,}4\,CaSO_4 \cdot 4CO(NH_2)_2 + 0{,}6\,CaSO_4 + CaF_2 \qquad (3)$$

In order to obtain in the final product an optimal content of soluble $P_2O_5$, and urea in the form of calcium sulfate tetraureate, the theoretical amount of sulfuric acid and urea component of the reactant solution used for the treatment of 1 kg of phosphate rock, can be calculated as follows:

- starting from the percentage of calcium in phosphate rock, determine the number M1 of moles of $Ca^{2+}$ contained in 1 kg of phosphate rock,

- starting from the percentage of $P_2O_5$ in the same phosphate rock, determine the number M2 of moles of $P_2O_5$ contained in 1 kg of phosphate rock,

A simplified hypothesis is adopted here that total $P_2O_5$ in the final product is associated with calcium ions in the form of monocalcium phosphate. The presence of other cations in the phosphate rock is also neglected, e.g. Mg, Fe, Al.

The number M3 of moles that are available to connect to the $SO_4^{2-}$ ions is equal to M1-M2. The number of moles of $SO_4^{2-}$ ions supplied by the reactant solution should be at least equal to the M3. The number of moles of urea delivered in the reactant solution is 3.6 M3.

For the purpose of carrying out the decomposition of 1 tonne of phosphate rock containing 30,25% P205 and 48,05% CaO using a reactant solution containing 3.6 mol urea per 1 mol sulfuric acid and 6,52 mol water, the amount of solution needed is calculated as follows: 48,05% CaO in 1 tonne of phosphate rock corresponds to 8,568 kmol, 30,25% $P_2O_5$ in 1 tonne of phosphate rock corresponds to 2,131 kmol,

The amount of sulfuric acid needed to bind the theoretically free calcium is equivalent to:

$$8{,}568 - 2{,}131 = 6{,}437 \text{ kmol of } 100\% \text{ sulfuric acid.}$$

$$6{,}437 * 10^3 * 0{,}098 = 631{,}3 \text{ kg}$$

The amount of urea needed to obtain a reactant solution containing 3.6 mol urea per 1 mol sulfuric acid is thus equal to:

$$6{,}437 * 10^3 \times 3{,}6 \times 0{,}06006 = 1391{,}8 \text{ kg}$$

The amount of water required to obtain a reactant solution containing 6,52 mol $H_2O$ per 1 mol $H_2SO_4$ is thus equal to:

$$6{,}437*10^3 \times 6{,}52 \times 0{,}018 = 755{,}4 \text{ kg}$$

This is the theoretical amount of that water. The quantity of actually entered water will be reduced by the amount of water entrained with sulfuric acid.

The amount of reactant solution needed to decompose 1 tonne of phosphate rock will be, therefore:

$$631{,}3 + 1391{,}8 + 755{,}4 = 2778{,}5 \text{ kg}$$

At an assumed density of 1.30 $kg/dm^3$ the volume of the solution is:

$$2778{,}5/1.30 = 2137{,}3 \text{ dm}^3$$

The on-spec fraction of the product was subjected to chemical analyses and evaluated in terms of its physico-chemical properties by determining the equivalent sphere diameter of granules, compressive strength at 80°C and after cooling down to room temperature, and the content of each nutrient form. These studies employed typical methods of chemical analysis: sieve analysis and Leva equation as well as an ERWEKA instrument for measuring the hardness of granules.

Test runs of the method according to the present invention have been carried out using two natural phosphates having different compositions, which resulted in changes in consumption standards of other raw materials. The results of the tests carried out, together with indicators of individual consumption of raw materials and the most important variables have been summarized in Tab. 1.

Tab. 1. Examples of the implementation of the method according to the invention, part 1.

| No. | Type of raw material / variable that describes the method of invention | Unit | Example number | | | | |
|---|---|---|---|---|---|---|---|
| | | | 1 | 2 | 3 | 4 | 5 |
| 1. | Type of phosphate rock | - | Morocco | Morocco | Morocco | Morocco | Morocco |
| 2. | CaO in phosphate rock | % wt. | 51.50 | 51.50 | 51.50 | 51.50 | 51.50 |
| 3. | $P_2O_5$ in phosphate rock | % wt. | 30.91 | 30.91 | 30.91 | 30.91 | 30.91 |
| 4. | Standard $H_2SO_4$ consumption | kg/100 kg phosphate rock | 68.71 | 68.71 | 68.71 | 68.71 | 68.71 |
| 5. | Molar rate: $CO(NH_2)_2$: $H_2SO_4$ | - | 3.6: 1 | 3.6: 1 | 3.6: 1 | 3.6: 1 | 3.6: 1 |
| 6 | Standard $CO(NH_2)_2$ consumption | kg/100 kg phosphate rock | 151.47 | 151.47 | 151.47 | 151.47 | 151.47 |
| 7. | Pulp prepn. time | minute | 120 | 120 | 120 | 120 | 120 |
| 8. | Water content in pulp | % wt. | 20 | 20 | 20 | 20 | 20 |
| 9. | Antifoam | % wt. | 0.02 | 0.05 | 0.05 | 0.05 | 0.05 |
| 10. | Solid additives to granulation | % wt. | - | - | Magnesite 5% | SSP 20% | USP 20% |
| 11. | Addition of $NH_3$ to granulation | +/- | - | + | - | - | - |
| 12. | Pulp temperature | °C | 75 | 75 | 75 | 75 | 75 |
| 13. | Temp. inside granulator | °C | 75 | 80 | 75 | 65 | 65 |
| 14. | Product temp. after dryer exit | °C | 85 | 85 | 90 | 90 | 85 |
| 15. | Recycle-to-feed ratio | - | 7:1 | 7:1 | 6:1 | 5:1 | 5:1 |
| 16. | Equivalent diameter | mm | 3.5 | 3.4 | 3.4 | 3.7 | 3.4 |

(continued)

| No. | Type of raw material / variable that describes the method of invention | Unit | Example number | | | | |
|---|---|---|---|---|---|---|---|
| | | | 1 | 2 | 3 | 4 | 5 |
| 17. | Granule hardness at 80°C | N/gran. | 19.4 | 21.2 | 39.8 | 41.5 | 22.1 |
| 18. | Granule hardness at 20°C | N/gran. | 39.7 | 40.6 | 56.3 | 60.1 | 52.3 |
| 19. | Total N in product | % wt. | 21.76 | 21.79 | 21.76 | 17.40 | 21.76 |
| 20. | $N_{NH_4^+}$ in product | % wt. | 1.50 | 1.80 | 1.70 | 1.60 | 1.50 |
| 21. | Amidosulfonic N | % wt. | > 0.005 | > 0.005 | > 0.005 | > 0.005 | > 0.005 |
| 22. | Total $P_2O_5$ in product | % wt. | 9.65 | 9.61 | 9.17 | 12.87 | 9.65 |
| 23. | Water soluble $P_2O_5$ in product | % wt. | 6.28 | 5.79 | 5.96 | 9.21 | 6.28 |
| 24. | $P_2O_5$ soluble in ammonium citrate volume in product | % wt. | 8.21 | 8.17 | 7.80 | 11.30 | 8.21 |
| 25. | MgO in the product | % wt. | - | - | 1.50 | - | - |
| 26. | $K_2O$ in the product | % wt. | - | - | - | - | - |
| 27. | $H_2O$ in the product | % wt. | 1.0 | 1.0 | 1.0 | 1.2 | 1.0 |

Tab. 1. Examples of the implementation of the method according to the invention, part 2.

| No. | Type of raw material/variable that describes the method of invention | Unit | Example number | | | | |
|---|---|---|---|---|---|---|---|
| | | | 6 | 7 | 8 | 9 | 10 |
| 1. | Type of phosphate rock | - | Morocco | Morocco | Morocco | Morocco | Morocco |
| 2. | CaO in phosphate rock | % wt. | 51.50 | 51.50 | 51.50 | 51.50 | 51.50 |
| 3. | $P_2O_5$ in phosphate rock | % wt. | 30.91 | 30.91 | 30.91 | 30.91 | 30.91 |
| 4. | Standard $H_2SO_4$ consumption | kg/100 kg phosphate rock | 68.71 | 68.71 | 68.71 | 68.71 | 68.71 |
| 5. | Molar ratio: $CO(NH_2)_2$: $H_2SO_4$ | - | 3.6: 1 | 3.6: 1 | 4:1 | 2.5: 1 | 1.5: 1 |
| 6. | Standard $CO(NH_2)_2$ consumption | kg/100 kg phosphate rock | 151.47 | 151.47 | 168.30 | 105.19 | 63.11 |
| 7. | Pulp prepn. time | minute | 120 | 120 | 135 | 105 | 90 |
| 8. | Water content in pulp | % wt. | 20 | 20 | 16 | 22.5 | 25 |
| 9. | Antifoam | % wt. | 0.05 | 0.02 | - | 0.10 | 0.10 |
| 10. | Solid additives to granulation | % wt. | KCl 16.7% Magnesite 3.3% | Potassium sulfate 20% | - | - | - |
| 11. | Addition of $NH_3$ to granulation | +/- | - | - | - | - | - |
| 12. | Pulp temperature | °C | 75 | 75 | 70 | 75 | 90 |
| 13. | Temp. inside granulator | °C | 65 | 65 | 70 | 75 | 75 |

(continued)

| No. | Type of raw material/variable that describes the method of invention | Unit | Example number | | | | |
|---|---|---|---|---|---|---|---|
| | | | 6 | 7 | 8 | 9 | 10 |
| 14. | Product temp. after dryer exit | °C | 80 | 85 | 80 | 85 | 85 |
| 15. | Recycle-to-feed ratio | - | 6:1 | 6:1 | 7:1 | 7:1 | 7:1 |
| 16. | Equivalent diameter | mm | 3.4 | 3.3 | 3.7 | 3.4 | 3.3 |
| 17. | Granule hardness at 80°C | N/gran. | 17. | 25.3 | 17.5 | 24.7 | 27.4 |
| 18. | Granule hardness at 20°C | N/gran. | 48.1 | 56.9 | 34.6 | 53.6 | 51.2 |
| 19. | Total N in product | % wt. | 17.40 | 17.40 | 22.97 | 17.67 | 12.52 |
| 20. | $N_{NH_4^+}$ in product | % wt. | 1.50 | 1.50 | 1.60 | 1.50 | 1.00 |
| 21. | Amidosulfonic N | % wt. | > 0.005 | > 0.005 | > 0.005 | > 0.005 | > 0.005 |
| 22. | Total $P_2O_5$ in product | % wt. | 7.72 | 7.72 | 9.17 | 11.28 | 13.33 |
| 23. | Water soluble $P_2O_5$ in product | % wt. | 5.02 | 5.02 | 5.50 | 6.77 | 8.00 |
| 24. | $P_2O_5$ soluble in ammonium citrate volume in product | % wt. | 6.98 | 6.98 | 8.71 | 9.59 | 11.33 |
| 25. | MgO in the product | % wt. | 1.11 | - | - | - | - |
| 26. | $K_2O$ in the product | % wt. | 10.02 | 10.00 | - | - | - |
| 27. | $H_2O$ in the product | % wt. | 1.2 | 1.2 | 1.3 | 1.0 | 1.0 |

Tab. 1. Examples of the implementation of the method according to the invention, part 3.

| No. | Type of raw material/variable that describes the method of invention | Unit | Example number | | | | |
|---|---|---|---|---|---|---|---|
| | | | 11 | 12 | 13 | 14 | 15 |
| 1. | Type of phosphate rock | - | Morocco | Morocco | Morocco | ALGIERS | ALGIERS |
| 2. | CaO in phosphate rock | % wt. | 51.50 | 51.50 | 51.50 | 48.05 | 48.05 |
| 3. | $P_2O_5$ in phosphate rock | % wt. | 30.91 | 30.91 | 30.91 | 30.25 | 30.25 |
| 4. | Standard $H_2SO_4$ consumption | kg/100 kg phosphate rock | 68.71 | 68.71 | 61.84 | 63.13 | 63.13 |
| 5. | Molar ratio: $CO(NH_2)_2$: $H_2SO_4$ | - | 3.6: 1 | 3.6: 1 | 3.6: 1 | 3.6: 1 | 3.6: 1 |
| 6. | Standard $CO(NH_2)_2$ consumption | kg/100 kg phosphate rock | 151.47 | 151.47 | 136.32 | 139.18 | 139.18 |
| 7. | Pulp prepn. time | minute | 120 | 120 | 105 | 180 | 180 |
| 8. | Water content in pulp | % wt. | 20 | 20 | 18 | 20 | 20 |
| 9. | Antifoam | % wt. | 0.05 | 0.05 | 0.10 | 0.15 | 0.20 |

(continued)

| No. | Type of raw material/variable that describes the method of invention | Unit | Example number | | | | |
|---|---|---|---|---|---|---|---|
| | | | 11 | 12 | 13 | 14 | 15 |
| 10. | Solid additives to granulation | % wt. | Phosphate rock 10 % | Ash 10% | - | - | - |
| 11. | Addition of $NH_3$ to granulation | +/- | - | - | - | - | + |
| 12. | Pulp temperature | °C | 75 | 75 | 75 | 75 | 75 |
| 13. | Temp. inside granulator | °C | 70 | 70 | 75 | 75 | 80 |
| 14. | Product temp. after dryer exit | °C | 85 | 85 | 85 | 85 | 85 |
| 15. | Recycle-to-feed ratio | - | 6:1 | 6:1 | 7:1 | 7:1 | 7:1 |
| 16. | Equivalent diameter | mm | 3.5 | 3.4 | 3.6 | 3.5 | 3.4 |
| 17. | Granule hardness at 80°C | N/gran. | 24.5 | 18.0 | 21.5 | 20.0 | 22.5 |
| 18. | Granule hardness at 20°C | N/gran. | 42.8 | 35.2 | 47.3 | 40.8 | 41 |
| 19. | Total N in product | % wt. | 19.58 | 19.58 | 19.58 | 21.18 | 21.21 |
| 20. | $N_{NH_4^+}$ in product | % wt. | 1.60 | 1.60 | 1.50 | 1.50 | 1.80 |
| 21. | Amidosulfonic N | % wt. | > 0.005 | > 0.005 | > 0.005 | > 0.005 | > 0.005 |
| 22. | Total $P_2O_5$ in product | % wt. | 12.74 | 12.55 | 12.74 | 10.00 | 10.00 |
| 23. | Water soluble $P_2O_5$ in product | % wt. | 6.50 | 6.50 | 6.50 | 6.50 | 6.50 |
| 24. | $P_2O_5$ soluble in ammonium citrate volume in product | % wt. | 8.46 | 8.71 | 8.46 | 8.50 | 8.50 |
| 25. | MgO in the product | % wt. | - | - | - | - | - |
| 26. | $K_2O$ in the product | % wt. | - | - | - | - | - |
| 27. | $H_2O$ in the product | % wt. | 1.2 | 1.2 | 1.2 | 1.0 | 1.0 |

Tab. 1. Examples of the implementation of the method according to the invention, part 4.

| No. | Type of raw material/variable that describes the method of invention | Unit | Example number | | | | |
|---|---|---|---|---|---|---|---|
| | | | 16 | 17 | 18 | 19 | 20 |
| 1. | Type of phosphate rock | - | ALGIERS | ALGIERS | ALGIERS | ALGIERS | ALGIERS |
| 2. | CaO in phosphate rock | % wt. | 48.05 | 48.05 | 48.05 | 48.05 | 48.05 |
| 3. | $P_2O_5$ in phosphate rock | % wt. | 30.25 | 30.25 | 30.25 | 30.25 | 30.25 |
| 4. | Standard $H_2SO_4$ consumption | kg/100 kg phosph.rock | 63.13 | 63.13 | 63.13 | 63.13 | 63.13 |
| 5. | Molar ratio: $CO(NH_2)_2$ : $H_2SO_4$ | - | 3.6: 1 | 3.6: 1 | 3.6: 1 | 3.6: 1 | 3.6: 1 |

(continued)

| No. | Type of raw material/variable that describes the method of invention | Unit | Example number | | | | |
|-----|-----|-----|-----|-----|-----|-----|-----|
| | | | 16 | 17 | 18 | 19 | 20 |
| 6. | Standard $CO(NH_2)_2$ consumption | kg/100 kg phosph.rock | 139.18 | 139.18 | 139.18 | 139.18 | 139.18 |
| 7. | Pulp preparation time | minute | 180 | 180 | 180 | 180 | 180 |
| 8. | Water content in pulp | % wt. | 20 | 20 | 20 | 20 | 20 |
| 9. | Antifoam | % wt. | 0.20 | 0.20 | 0.20 | 0.20 | 0.20 |
| 10. | Solid additives to granulation | % wt. | Magnesite 5% | SSP 20% | USP 20% | KCl 16.7%. Magnesite 3.3% | Potassium sulfate 20% |
| 11. | Addition of $NH_3$ to granulation | +/- | - | - | - | - | - |
| 12. | Pulp temperature | °C | 75 | 75 | 75 | 70 | 75 |
| 13. | Temp. inside granulator | °C | 75 | 65 | 65 | 65 | 65 |
| 14. | Product temp. after dryer exit Suszarki | °C | 90 | 90 | 85 | 80 | 80 |
| 15. | Recycle-to-feed ratio | - | 6:1 | 5:1 | 5:1 | 6:1 | 6:1 |
| 16. | Equivalent diameter | mm | 3.4 | 3.7 | 3.4 | 3.4 | 3.3 |
| 17. | Granule hardness at 80°C | N/gran. | 38.9 | 42.3 | 21.6 | 16.7 | 26.8 |
| 18. | Granule hardness at 20°C | N/gran. | 55.4 | 61.2 | 51.8 | 51.6 | 58.2 |
| 19. | Total N in product | % wt. | 20.12 | 16.94 | 21.18 | 16.94 | 16.94 |
| 20. | $N_{NH_4^+}$ in product | % wt. | 1.70 | 1.60 | 1.50 | 1.70 | 1.70 |
| 21. | Amidosulfonic N | % wt. | > 0.005 | > 0.005 | > 0.005 | > 0.005 | >0.005 |
| 22. | Total $P_2O_5$ in product | % wt. | 9.50 | 13.70 | 10.00 | 8.00 | 8.00 |
| 23. | Water soluble $P_2O_5$ in product | % wt. | 6.17 | 9.75 | 6.50 | 5.20 | 5.20 |
| 24. | $P_2O_5$ soluble in ammonium citrate volume in product | % wt. | 8.07 | 12.00 | 8.50 | 6.80 | 6.80 |
| 25. | MgO in the product | % wt. | 1.50 | - | - | 1.11 | - |
| 26. | $K_2O$ in the product | % wt. | - | - | - | 10,02 | 10.00 |
| 27. | $H_2O$ in the product | % wt. | 1.0 | 1.2 | 1.0 | 1.2 | 1.2 |

Tab. 1. Examples of the implementation of the method according to the invention, part 5.

| No. | Type of raw material/variable that describes the method of invention | Unit | Example number | | | | |
|---|---|---|---|---|---|---|---|
| | | | 21 | 22 | 23 | 24 | 25 |
| 1. | Type of phosphate rock | - | ALGIERS | ALGIERS | ALGIERS | ALGIERS | ALGIERS |
| 2. | CaO in phosphate rock | % wt. | 48.05 | 48.05 | 48.05 | 48.05 | 48.05 |
| 3. | $P_2O_5$ in phosphate rock | % wt. | 30.25 | 30.25 | 30.25 | 30.25 | 30.25 |
| 4. | Standard $H_2SO_4$ consumption | kg/100 kg phosph.rock | 63.13 | 63.13 | 63.13 | 63.13 | 63.13 |
| 5. | Molar ratio: $CO(NH_2)_2$: $H_2SO_4$ | - | 4:1 | 2.5: 1 | 1.5: 1 | 3.6: 1 | 3.6: 1 |
| 6. | Standard $CO(NH_2)_2$ consumption | kg/100 kg phosph.rock | 154.64 | 96.65 | 57.99 | 139.18 | 139.18 |
| 7. | Pulp preparation time | minute | 180 | 165 | 120 | 180 | 180 |
| 8. | Water content in pulp | % wt. | 16 | 22.5 | 25 | 20 | 20 |
| 9. | Antifoam | % wt. | - | 0.10 | 0.10 | 0.10 | 0.20 |
| 10. | Solid additives to granulation | % wt. | - | - | - | Phosphate rock 10 % | Ash 10 %. |
| 11. | Addition of $NH_3$ to granulation | +/- | - | - | - | - | - |
| 12. | Pulp temperature | °C | 75 | 75 | 90 | 75 | 75 |
| 13. | Temp. inside granulator | °C | 75 | 75 | 75 | 70 | 70 |
| 14. | Product temp. after dryer exit | °C | 80 | 85 | 85 | 85 | 85 |
| 15. | Recycle-to-feed ratio | - | 7;1 | 7:1 | 7:1 | 6:1 | 6:1 |
| 16. | Equivalent diameter | mm | 3.7 | 3.5 | 3.5 | 3.4 | 3.2 |
| 17. | Granule hardness at 80°C | N/gran. | 17.7 | 23.9 | 26.1 | 25.0 | 18.0 |
| 18. | Granule hardness at 20°C | N/gran. | 33.5 | 52.7 | 54.6 | 49.2 | 35.4 |
| 19. | Total N in product | % wt. | 22.38 | 17.11 | 12.06 | 19.06 | 19.06 |
| 20. | $N_{NH_4^+}$ in product | % wt. | 1.70 | 1.50 | 1.00 | 1.60 | 1.60 |
| 21. | Amidosulfonic N | % wt. | > 0.005 | > 0.005 | > 0.005 | > 0.005 | > 0.005 |
| 22. | Total $P_2O_5$ in product | % wt. | 9.52 | 11.64 | 13 768 | 13.02 | 12.90 |
| 23. | Water soluble $P_2O_5$ in product | % wt. | 6.19 | 7.57 | 8.89 | 6.50 | 6.50 |
| 24. | $P_2O_5$ soluble in ammonium citrate volume in product | % wt. | 8.09 | 9.89 | 11.63 | 8.75 | 9.0 |
| 25. | MgO in the product | % wt. | - | - | - | - | - |
| 26. | $K_2O$ in the product | % wt. | - | - | - | - | - |

(continued)

| No. | Type of raw material/variable that describes the method of invention | Unit | Example number | | | | |
|---|---|---|---|---|---|---|---|
| | | | 21 | 22 | 23 | 24 | 25 |
| 27. | $H_2O$ in the product | % wt. | 1.3 | 1.0 | 1.0 | 1.2 | 1.2 |

Unexpectedly, it turned out that using a reactant solution with increased water content, and so with lowered concentration of sulfuric acid and urea, a high-quality granulated product (USP) can be obtained in a continuous manner without the need for aging or techniques such as the "cold recycle". Lowering the concentrations of the reactants (urea and sulfuric acid), as a result of the addition of water, did not result in an excessive drop in the driving force, i.e. the difference of chemical potentials. However, it caused a reduction of kinetic resistance for reactions occurring in the pulp preparation step, as a result of which it was possible to achieve complete reaction turnover for the reagents in this step, as a result of which it was possible to use the pulp thus prepared for fertilizer granulation. It has been found experimentally that the fertilizer granules leaving the dryer feature such a mechanical strength, and don't show a tendency to stick together, that it is not necessary to cool the stream leaving the dryer nor age it before classification.

An extremely important issue is the amount of recycle during the granulation process. Large recycle lengthens the time of high temperature acting on a fertilizer and also results in high energy consumption for agitating large masses of the reactants at the plant. Energy consumption figures are important for every type of activity. In the case of fertilizers containing USP, an important issue is also the time of high temperature acting on the fertilizers being manufactured, because reactions between urea and other components can run in the fertilizers, affecting their quality. These reactions include:

- hydrolysis reactions, which, among other things, cause phosphorus reversion, e.g.:

$$CO(NH_2)_2 + H_2O = CO_2 + 2NH_3 \qquad (14)$$

$$2NH_3 + Ca(H_2PO_4)_2 = CaHPO_4 + (NH_4)_2HPO_4 \qquad (15)$$

- biuret formation reaction (also contributes to phosphorus deficiency):

$$2CO(NH_2)_2 = NH_2 - CO - NH - CO - NH_2 + NH_3 \qquad (13)$$

There is not, however, a significant likelihood of occurrence of reactions with free acids and hydro-salts, with formation of amidocompounds of sulfur and phosphorus (equation 8-12) at this stage of the process carried out in accordance with the present invention, which the creators of this invention have found experimentally. The amount of recycle is most affected by water in raw material feed as well as urea content, since both these substances generally liquefy granulated mixtures. Unexpectedly, we found that using additional raw material, i.e. urea, one can produce process slurries having much lower water content than in superphosphate pulps, with satisfactory transport and granulation properties. While water content in SSP pulp allowing it to be transported using pumps and pipelines is approximately 40%, and 30% in the case of TSP-pulp, this content is 16-25% for USP pulps. It also turned out that by applying reactant solutions of urea in sulfuric acid having several times higher water content compared to the GPN proposal, one can manufacture a product in which urea is bound into an adduct with calcium sulfate, when experimental data regarding systems $CO(NH_2)_2$ - $CaSO_4$ - $H_2O$ systems indicate the formation of hydrates of calcium sulfate.

Available in the literature are phase diagrams of the system: $CaSO_4$ - $CO(NH_2)_2$ - $H_2O$ for temperatures of 20, 30, 40 and 70°C. For the purposes of our invention, on the basis of data relating to a temperature of 70°C (no data available for higher temperatures), one can carry out a simplified feasibility analysis for producing a chemical compound with the formula $CaSO_4 \cdot 4CO(NH_2)_2$, depending on the ratio of $CO(NH_2)_2$: $H_2SO_4$ and water content in reactant solution used to prepare it. This analysis can only be simplified because the system in which the USP is formed is more complex - it includes $Ca(H_2PO_4)_2$ and other substances. The chart in Fig. 2 shows data from the work of Sulajmankulov (Sulajmankulov K. et al., Atlas diagram rastvorimosti trojnych vodno-solevych system, Izd. Jlin, Frunze, 1980), prepared on the basis of data from the work of Uno (Uno S., J. Soc. Chem. Ind. Japan, 43, 273, 1940). Marked in this figure are areas of crystallization of urea and $CaSO_4 \cdot 4CO(NH_2)_2$ adduct (A), the $CaSO_4 \cdot 4CO(NH_2)_2$ adduct alone (B), the adduct $CaSO_4 \cdot 4CO(NH_2)_2$ and calcium sulfate dihydrate (C), and the calcium sulfate dihydrate alone (D). In addition, marked with the letter "X" is a field which concerns the solution according to the application WO 92/10443 and French patent 2.684.372, and the letter "Y" concerns the field related to the present invention. The X and Y fields have been determined assuming that substances other than $CaSO_4$, $CO(NH_2)_2$ and $H_2O$ do not affect the equilibria shown in Fig. 2.

The method to determine the fields X and Y was as follows:

- field X is outlined by the following points:

    - $CaSO_4 \cdot 4CO(NH_2)_2$ (points from patent claims)
    - $CaSO_4 \cdot CO(NH_2)_2$ (points from patent claims)
    - $CaSO_4 \cdot 4CO(NH_2)_2$ + 8,9 % $H_2O$ (as a result of the transformation of $H_2SO_4$ into $CaSO_4$ from the starting mixture of $CO(NH_2)_2$: $H_2SO_4$ = 4:1 water content in the mixture has been reduced from 10% to 8.9%)
    - $CaSO_4 \cdot CO(NH_2)_2$ + 8,2 % $H_2O$ (as a result of the transformation of $H_2SO_4$ into $CaSO_4$ in the initial mixture with a 1: 1 ratio, water content in the reactant mixture was lowered from 10% to 8.2%).

- field Y (related to our invention) has been determined as follows:

    - it was experimentally determined that process pulps containing 16-25% of water possess appropriate transport and granulation properties,
    - water content was calculated for $CaSO_4$ - $CO(NH_2)_2$ - $H_2O$ systems for pulp water content of 16 and 25%, and for the claimed molar ratios of $CO(NH_2)_2$ : $H_2SO_4$ of 4: 1 and 1.5: 1
    - field Y is located between the following points: $CaSO_4 \cdot 4CO(NH_2)_2$ + 19,3% $H_2O$; $CaSO_4 \cdot 4CO(NH_2)_2$ + 29,5% $H_2O$; $CaSO_4 \cdot 1,5CO(NH_2)_2$ + 21,3% $H_2O$; $CaSO_4 \cdot 1,5CO(NH_2)_2$ + 32,2% $H_2O$

As one can see, field X is located entirely in the area C, which is the crystallization area of the adduct $CaSO_4 \cdot 4CO(NH_2)_2$ and $CaSO_4 \cdot 2H_2O$.

On the other hand, field Y is located on two areas C and D, namely crystallization of $CaSO_4 \cdot 4CO(NH_2)_2$ and $CaSO_4 \cdot 2H_2O$ (C) and $CaSO_4 \cdot 2H_2O$ (D) alone.

In so far as in the case of field X there is no doubt as to the form in which urea exists, it is the adduct $CaSO_4 \cdot 4CO(NH_2)_2$, and the remaining amount of calcium sulfate is $CaSO_4 \cdot 2 H_2O$.

However, in the case of area Y, which concerns our invention, the situation is different. A part of field Y lies in an area where it is not possible to create $CaSO_4 \cdot 4CO(NH_2)_2$. Unexpectedly, it turned out that, despite the above, semi-industrial tests for the whole area Y yielded positive results. Virtually all of urea in the product was bound into $CaSO_4 \cdot 4CO(NH_2)_2$ adduct.

USP type fertilizers with compositions according to our invention are characterized by high urea content. In case of fertilizers that contain a significant amount of urea but no calcium sulfate, great difficulties are experienced with granulation and drying of the fertilizers, due to the strong liquefaction of granulated and dried mixtures by urea. In such cases it is necessary to use special solutions in the granulation, drying and classification units, for example expansion of the drying unit or application of cooling prior to classification. The method according to our invention avoids such a necessity.

Unexpectedly, the beneficial properties of USP that allow for granulation and drying of granules in conditions acceptable in a typical, slurry-based plant for the production of compound fertilizers, are due to the fact that urea is in the form of an adduct with calcium sulfate. As a result, urea does not liquefy the granulated and dried mixtures to such an extent as is the case when the urea is in the unbound form. This is evidenced by the results of our research. In order to illustrate the effect of urea binding into adduct on granulation and drying conditions, one can provide information about melting temperatures of unbound urea and urea bound into adduct. In DTA and TG conditions the melting temperature difference is as high as 50°C, which explains the strongly stabilizing effect of urea binding on granulation and drying of the USP fertilizer. It was also found that the addition of magnesite and phosphate rock greatly improves the stability of the USP, as a result of which drying and classification of the product is possible at a higher temperature than in the manufacture of USP without these additives.

## Claims

1. A method for the manufacture of a nitrogen-phosphate fertilizer containing nitrogen in the form of calcium sulphate tetraureate and phosphorus in the form of a mono- and/or dicalcium phosphate, obtained by decomposition of finely ground phosphoric raw material of natural origin using a urea-sulfuric acid solution, with off-spec product being recycled, **characterised in that** the reaction of the phosphoric raw material decomposition is carried out using a reactant solution containing from 1.5 to 4.0 mol of urea per 1 mol of sulphuric acid, in a quantity corresponding to 90 to 100% of acid in respect of the stoichiometric requirement for the complete decomposition of the rock phosphate, whereas into the reaction environment water is added in an amount necessary to ensure its content in process pulp in the range 16-25% in respect of the whole mass of the slurry, and the process pulp obtained is fed directly to a granulation unit.

2. The method according to claim 1, **characterised in that** the natural raw material is replaced up to 50% by weight with ash from incineration of wastewater sludges and/or waste animal tissues with $P_2O_5$ content above 20% by weight.

3. The method according to claim 1, **characterised in that** up to 50% of the sulphuric acid feed input is replaced by phosphoric acid at a proportion of 1 mole sulphuric acid per two moles of phosphoric acid.

4. The method according to claim 1, **characterised in that** phosphoric acid is added to the reactant solution fed to a process pulp manufacturing unit or is fed directly to that unit.

5. The method according to claim 1, **characterised in that** crystallization seeds are added to the pulp unit, preferably in the form of recycled fine fraction of the fertilizer product, in an amount up to 5% by weight.

6. The method according to claim 5, **characterised in that** dust from this plant's off-gas dust removal unit is added to the pulp unit.

7. The method according to claim 1, **characterised in that** the time necessary for the production of the process pulp is 90-180 minutes.

8. The method according to claim 1, **characterised in that** the reactant solution fed to the reaction with phosphate rock has a temperature from 35 to 75°C, preferably from 45 to 65°C.

9. The method according to claim 1, **characterised in that** the reaction of the rock phosphate with the reactant solution is carried out at a temperature below 90°C, preferably from 70-90°C.

10. The method according to claim 1, **characterised in that** into the reaction environment of rock phosphate with reactant solution an antifoam surfactant is added in an amount up to 0,02% by weight of the fertilizer end product.

11. The method according to claim 10, **characterised in that** the antifoam surfactant is a sodium salt of di-(2-ethylhexyl)sulfosuccinate.

12. The method according to claim 1, **characterised in that** product temperature after drying is maintained at not more than 105°C, preferably not more than 95°C.

13. The method according to claim 1, **characterised in that** at least one finely ground component given below is added to the granulation unit:

   - a phosphoric component selected from a group comprising superphosphates, phosphate rocks, ashes from the incineration of sewage sludge and fly ash from the incineration of animal tissues,
   - a phosphate-nitrogen component selected from a group comprising monoammonium phosphate (MAP), diammonium phosphate (DAP), and a USP powdery fertilizer,
   - a potassium component selected from a group comprising potassium chloride and potassium sulfate,
   - a magnesium component, in particular magnesium sulfate,
   - a fossil component selected from a group comprising kieserite, carnallite, magnesite and dolomite,
   - a microelemental component, in particular boric acid.

14. The method according to claim 1, **characterised in that** the entire amount of water is introduced to the pulp production unit (3), preferably in the form of a reactant solution.

15. The method according to claim 1, **characterised in that** steam and/or ammonia are added to the granulation unit.

16. The method according to claim 15, **characterised in that** additionally steam and/or ammonia and/or magnesite are added to the granulation unit.

17. The method according to claim 15, **characterised in that** additionally steam and/or ammonia and/or bentonite are added to the granulation unit.

**Patentansprüche**

1. Eine Methode der Herstellung von Stickstoff-Phosphat-Dünger, der Stickstoff in der Form von Calciumsulphat-Tetraureat sowie Phosphor in der Form von Calciumdihydrogenphosphat und/oder Calciumhydrogenphosphat enthält, der durch Zerfall von fein zerkleinertem phosphorhaltigem natürlichem Rohstoff mit Hilfe einer Harnstoff-Schwefelsäure-Lösung gewonnen wird, mit Wiederverwertung von Produkten, welche die Anforderungen nicht erfüllen, mit den Eigenschaften, dass die Reaktion des Zerfalls des phosphorhaltigen Rohstoffes mit Hilfe einer Reagenzienlösung stattfindet, die zwischen 1,5 bis 4,0 Mol Harnstoff je 1 Mol Schwefelsäure enthält, bei einer Menge, welche 90% bis 100% der Säure im Hinblick auf die stöchiometrischen Anforderungen für den vollständigen Zerfall des Phosphatgesteins entspricht, wobei der Reaktionsumgebung Wasser zugeführt wird, in einer Menge, welche zur Sicherung des Gehalts desselben im Prozesshalbstoff im Bereich 16%-25% des Gesamtmasse des Schlamms notwendig ist, wobei nachher der gewonnene Prozesshalbstoff direkt der Granulationseinheit zugeführt wird.

2. Die Methode gemäß Anspruch 1, **dadurch gekennzeichnet, dass** der natürliche Rohstoff bis zu 50% nach Gewicht durch Asche aus der Verbrennung des Altwasserschlämme und/oder Tier-Abfallgewebe mit einer Gehalt an $P_2O_5$ über 20% nach Gewicht ersetzt wird.

3. Die Methode gemäß Anspruch 1, **dadurch gekennzeichnet, dass** bis zu 50% des Zufuhrt der Schwefelsaure durch Phosphorsäure bei einem Verhältnis von 1 Mol Schwefelsäure für jede 2 Mol von Phosphorsäure ersetzt wird.

4. Die Methode gemäß Anspruch 1, **dadurch gekennzeichnet, dass** zur Reagenzienlösung, die einer Prozesshalbstoff-Herstellungseinheit zugeführt wird, oder die dieser Einheit direkt zugeführt wird, Phosphorsäure gegeben wird.

5. Die Methode gemäß Anspruch 1, **dadurch gekennzeichnet, dass** Kristallisationskerne der Schlammeinheit zugeführt werden, bevorzugt in der Form des wieder verwerteten Feinkornanteils des Düngerprodukts, in einer Menge bis zu 5% nach Gewicht.

6. Die Methode gemäß Anspruch 5, **dadurch gekennzeichnet, dass** der Staub aus der Abgas-Staubentfemungseinheit der Schlammeinheit zugeführt wird.

7. Die Methode gemäß Anspruch 1, **dadurch gekennzeichnet, dass** die für die Herstellung von Prozessschlamm notwendige Zeit 90 bis 180 Minuten beträgt.

8. Die Methode gemäß Anspruch 1, **dadurch gekennzeichnet, dass** die Reagenzienlösung, welche zur Reaktion mit Phosphatgestein gegeben wird, eine Temperatur von 35 bis 75 °C, am besten zwischen 45 und 65 °C, aufweisen soll.

9. Die Methode gemäß Anspruch 1, **dadurch gekennzeichnet, dass** die Reaktion des Phosphatgesteins mit der Reagenzienlösung bei einer Temperatur unter 90 °C, mit der Empfehlung zwischen 70 und 90 °C, stattfindet.

10. Die Methode gemäß Anspruch 1, **dadurch gekennzeichnet, dass** der Reaktionsumgebung des Steinphosphats mit der Reagenzienlösung ein Antischaum-Tensid in der Menge von bis zu 0,02% nach Gewicht des Dünger-Endproduktes hinzugeführt wird.

11. Die Methode gemäß Anspruch 10, **dadurch gekennzeichnet, dass** der Antischaum-Tensid ein Natriumsalz von Di-(2-ethylhexyl)Sulfosuccinat ist.

12. Die Methode gemäß Anspruch 1, **dadurch gekennzeichnet, dass** die Produkttemperatur nach dem Trocknen bei einem Wert von nicht mehr als 105 °C gehalten wird, vorzugsweise nicht mehr als 95 °C.

13. Die Methode gemäß Anspruch 1, **dadurch gekennzeichnet, dass** mindestens eine fein zerkleinerte Zutat aus den unten angegebenen der Granulationseinheit zugeführt wird:

    - eine phosphorhaltige Zutat, gewählt aus der Gruppe umfassend Superphosphate, Phosphatgestein, Asche aus der Verbrennung von Abwasserschlamm sowie Flugasche aus der Verbrennung von Tiergewebe,
    - eine phosphat- und stickstoffhaltige Zutat, gewählt aus der Gruppe umfassend Ammoniumdihydrogenphosphat (MAP), Diammoniumhydrogenphosphat (DAP), sowie USP-Pulverdünger,
- eine kaliumhaltige Zutat, gewählt aus der Gruppe umfassend Kaliumchlorid sowie Kaliumsulfat,
- eine magnesiumhaltige Zutat, insbesondere Magnesiumsulfat,
- eine fossile Zutat, gewählt aus der Gruppe umfassend Kieserit, Karnalit, Magnesit und Dolomit,
- ein mikroelementhaltige Zutat, insbesondere Borsäure.

**14.** Die Methode gemäß Anspruch 1, **dadurch gekennzeichnet, dass** die Gesamtmenge der Schlammproduktionseinheit (3), empfehlenswert in der Form einer Reagenzienlösung, zugeführt wird.

**15.** Die Methode gemäß Anspruch 1, **dadurch gekennzeichnet, dass** der Granulationseinheit Dampf und/oder Ammonium zugeführt werden.

**16.** Die Methode gemäß Anspruch 15, **dadurch gekennzeichnet, dass** der Granulationseinheit zusätzlich Dampf und/oder Ammonium und/oder Magnesit hinzugefügt werden.

**17.** Die Methode gemäß Anspruch 15, **dadurch gekennzeichnet, dass** der Granulationseinheit zusätzlich Dampf und/oder Ammonium und/oder Bentonit hinzugefügt werden.

## Revendications

**1.** Procédé pour la fabrication d'un engrais à base d'azote et de phosphate contenant de l'azote sous forme de sulfate tétrahydraté de calcium et du phosphore sous forme de phosphate mono- et/ou bicalcique obtenu par décomposition de la matière première phosphorique finement broyée d'origine naturelle à l'aide d'une solution d'urée et d'acide sulfurique, avec des produits hors spécifications recyclés, **caractérisé en ce que** la réaction de la décomposition de la matière première phosphorique est effectuée à l'aide d'une solution réactive contenant de 1,5 à 4,0 moles d'urée par 1 mole d'acide sulfurique, en quantité correspondant à un niveau de 90 à 100% d'acide en ce qui concerne les exigences stoechiométriques pour la décomposition complète du phosphate de roche, alors que dans l'eau du milieu réactionnel elle est ajoutée en une quantité nécessaire pour assurer sa teneur dans la pâte de traitement comprise de 16 à 25%, en ce qui concerne la masse totale de la suspension, et la pâte de traitement obtenue est amenée directement à une unité de granulation.

**2.** Procédé selon la revendication 1, **caractérisé en ce que** la matière première naturelle est remplacée jusqu'à 50% en poids par la cendre provenant de l'incinération de boues d'épuration et/ou de déchets de tissus animaux ayant une teneur en $P_2O_5$ supérieure à 20% en poids.

**3.** Procédé selon la revendication 1, **caractérisé en ce que** jusqu'à 50% de l'entrée d'alimentation en acide sulfurique est remplacée par l'acide phosphorique à une proportion d'une mole d'acide sulfurique par deux moles d'acide phosphorique.

**4.** Procédé selon la revendication 1, **caractérisé en ce que** l'acide phosphorique est ajouté à la solution réactive introduite dans une unité de fabrication de pâte de traitement ou est alimenté directement à cette unité.

**5.** Procédé selon la revendication 1, **caractérisé en ce que** les germes de cristallisation sont ajoutés à l'unité de pâte, de préférence sous forme de fraction fine recyclée du produit fertilisant, en une quantité allant jusqu'à 5% en poids.

**6.** Procédé selon la revendication 5, **caractérisé en ce que** la poussière provenant de cette unité non gazeuse d'élimination de poussière de la plante est ajoutée à l'unité de pâte.

**7.** Procédé selon la revendication 1, **caractérisé en ce que** le temps nécessaire pour la production de la pâte de traitement est de 90-180 minutes.

**8.** Procédé selon la revendication 1, **caractérisé en ce que** la solution réactive introduite dans la réaction avec la roche phosphatée a une température de 35 à 75°C, et de préférence, de 45 à 65°C.

**9.** Procédé selon la revendication 1, **caractérisé en ce que** la réaction du phosphate de roche avec la solution réactive est effectuée à une température inférieure à 90°C, et de préférence, à celle de 70-90°C.

**10.** Procédé selon la revendication 1, **caractérisé en ce que**, dans le milieu réactionnel du phosphate de roche avec une solution réactive, un agent tensioactif anti-mousse est ajouté en une quantité allant jusqu'à 0,02% en poids du produit fini fertilisant.

**11.** Procédé selon la revendication 10, **caractérisé en ce que** cet agent tensio-actif anti-moussant est un dioctyl sulfosuccinate de sodium.

**12.** Procédé selon la revendication 1, **caractérisé en ce que** la température du produit après séchage est maintenue au maximum à 105°C, et de préférence ne dépasse pas 95°C.

**13.** Procédé selon la revendication 1, **caractérisé en ce qu'**au moins un composant finement broyé indiqué ci-dessous est ajouté à l'unité de granulation :

- un composant phosphorique choisi d'un groupe comprenant des superphosphates, des roches phosphatées, des cendres provenant de l'incinération de boues d'épuration, ainsi que des cendres volantes provenant de l'incinération de tissus animaux,
- un composant de phosphate et d'azote choisi d'un groupe comprenant le phosphate de monoammonium (MAP), le phosphate de diammonium (DAP) et un engrais en poudre USP,
- un composant de potassium choisi d'un groupe comprenant le chlorure de potassium et le sulfate de potassium,
- un composant de magnésium, en particulier le sulfate de magnésium,
- un composant fossile choisi d'un groupe comprenant la kiesérite, la carnallite, la magnésite, la dolomite,
- un composant micro-élément, en particulier l'acide borique.

**14.** Procédé selon la revendication 1, **caractérisé en ce que** la quantité totale d'eau est introduite dans l'unité de production de pâte (3), de préférence sous forme de solution réactive.

**15.** Procédé selon la revendication 1, **caractérisé en ce que** la vapeur d'eau et/ou l'ammoniac sont ajoutés à l'unité de granulation.

**16.** Procédé selon la revendication 15, **caractérisé en ce que** la vapeur d'eau et/ou l'ammoniac et/ou de la magnésite sont complémentairement ajoutés à l'unité de granulation.

**17.** Procédé selon la revendication 15, **caractérisé en ce que** la vapeur d'eau et/ou l'ammoniac et/ou la bentonite sont complémentairement ajoutés à l'unité de granulation.

Fig. 1

**Fig. 2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0142172 A
- WO 9210443 A
- FR 2684372

**Non-patent literature cited in the description**

- **ACHARD P. ; SCHWOB Y. ; LIMOUSIN L.** A new route for urea superphosphate fertilizers. *Phos. and Pot.,* May 1994, 27-33
- **NOWAK R.** Technologia wytwarzania i jakość nawozów mineralnych produkowanych na bazie USP w Zakadach Chemicznych ''SIARKOPOL. *Przem. Chem.,* 2003, vol. 82 (8-9), 855-860
- **UNO S.** *J. Soc. Chem. Ind. Japan,* 1940, vol. 43, 273